# EUROPEAN PATENT APPLICATION

(11) **EP 1 176 530 A1**
(43) Date of publication of application: **30.01.2002**
(21) Application number: 01300676.2
(22) Date of filing: 25.01.2001
(51) Int. Cl.: G06F 17/60

(54) **Improved product information brokerage system**

(30) Priority: 19.07.2000 JP 2000219707
(71) Applicant: FUJITSU LIMITED, Kawasaki-shi, Kanagawa 211-8588 (JP)
(72) Inventor: Fujita, Ichiro, c/o Fujitsu Limited, Kawasaki-shi, Kanagawa 211-8588 (JP)
(74) Representative: Stebbing, Timothy Charles

(57) **Abstract**

A product information brokerage system (101) for mediating between a plurality of users and a plurality of manufacturers via an electronic network, the system including a user information storage unit (111, 112) for storing user attribute information and user-owned product information, a product information storage unit (113, 114, 115) for storing product information, a product information providing unit (105, 107, 108) for providing users with information related to the products owned by users based on the product information, and a user information providing unit (104) for providing user information to manufacturers of the products owned by users based on the user attribute information and user-owned product information.

## Description

### BACKGROUND OF THE INVENTION

### 1. Field of the Invention

The present invention relates generally to a system that supports commercial transactions in durable consumer goods (hereinafter consumer durables) over an electronic network.

### 2. Description of Related Art

Conventionally, whenever consumers want to know the specifications for or the proper use of an appliance or other such articles they have purchased, or when they wish to contact the manufacturer, they refer to the manual that accompanied the product at the time of purchase. Additionally, whenever manufacturers want to survey how well their products are doing in the marketplace, they typically resort to survey questionnaires.

Similarly, when customers have a problem with the goods, they contact the manufacturer, give the name of the model and so forth, and request a repair.

The manufacturers, for their part, have used television, newspapers and other advertising media to advertise their products.

Additionally, when purchasing optional equipment and replacement parts, consumers usually obtain a catalogue from the retailer or the manufacturer and then determine from the model serial number whether the products in question match the goods they already possess.

Additionally, when seeking to replace the items they have, consumers have compared the catalogues for their existing goods with the specifications found in the latest catalogues from the retailers and manufacturers to select a suitable replacement.

Further, when selecting a manufacturer at time of purchase consumers check the length of time of any warranty and its coverage (that is, the level of after-sale service) from the manufacturer's web site or catalogue.

However, it often happens that users lose the manual or that the information contained in the manual may have become outdated. Similarly, manufacturers find that even if they use survey questionnaires the return rates are low, and so it is difficult to obtain accurate information on the state of use of their products.

Moreover, although manufacturers do provide a variety of information at their web sites, virtually all such information is accessible without any individual information registration required, so the manufacturers obtain little or no information about the users of their products. Conversely, there are web sites available that require users to provide individual information in exchange for the information available at the web site. However, users tend to avoid such sites. Thus, an arrangement that users can use easily, and which makes registration easy if such is required, is sought.

Additionally, consumers often encounter the problem that, when requesting servicing or repair of the goods they have bought, there is the problem that manuals are often lost and hence the requisite contact information is unavailable.

For their part, manufacturers often encounter the problem that even though they use television and newspaper advertisements, such advertising is generalized and unfocussed, without a target.

Additionally, although separate from and in addition to the optional equipment and replacement parts designated as genuine by the manufacturers there are cheaper compatible alternatives that are available as well, it is not necessarily easy to find inexpensive alternatives that are compatible with the products purchased by the consumer. From the point of view of the manufacturers of these compatible alternatives, so long as they have no feedback from consumers they cannot tell how well their products are satisfying market demands, and hence they cannot effectively provide useful information to the owners of products with which their own products might be compatible.

Additionally, when it comes time to replace the articles they have purchased with similar ones, consumers sometimes cannot locate the old catalogue or obtain a new catalog, so they cannot compare specifications.

Further, although consumers can research the level of after-sales support provided by manufacturers by checking the manufacturers' web sites, in practice this means they must check each manufacturer's web site individually, which is time-consuming.

### BRIEF SUMMARY OF THE INVENTION

Accordingly, it is a general object of the present invention to provide an improved product information brokerage system, in which the above-described disadvantages are eliminated.

The above-described objects of the present invention are achieved by a product information brokerage system for mediating between a plurality of users and a plurality of manufacturers via an electronic network, the system comprising:
a user information storage unit for storing user attribute information and user-owned product information;
a product information storage unit for storing product information;
a product information providing unit for providing users with information related to the products owned by users based on the product information; and
a user information providing unit for providing user information to manufacturers of the products owned by users based on the user attribute information and user-owned product information.

According to this aspect of the invention, a plurality of users register information about the products they use and a plurality of manufacturers register information about the products they make, thus affording users easy access to helpful information when their products break down and affording manufacturers a source of reliable information about the performance of their products and allowing them to maintain appropriate inventory levels of replacement parts for older models, thus allowing manufacturers to provide users with more effective service.

Additionally, by requiring user registration information only when necessary to accommodate a service repair request or register a new product purchased, the system is easier for consumers to use and easier for manufacturers to require users to register when necessary.

Additionally, by having individual manufacturers register the level of after-sale service, users can make an easy comparison of specifications and manufacturers.

Additionally, by having individual manufacturers register the level of after-sale service, users can make an easy comparison between manufacturers.

Other objects, features and advantages of the present invention will become more apparent from the following detailed description when read in conjunction with the accompanying drawings.

### BRIEF DESCRIPTION OF THE DRAWINGS

FIG. 1 is a block diagram of an improved product information brokerage system according to one embodiment of the present invention;
FIG. 2 is a flow chart of steps in a processing of a service repair request;
FIG. 3 is a flow chart of steps in a process of providing an advertisement;
FIG. 4 is a flow chart of steps in a process of searching for optional parts and replacement parts;
FIG. 5 is a flow chart of steps in a process of comparing user-owned products;
FIG. 6 is a flow chart of steps in a process of comparing after-sale service information;
FIG. 7 is an initial screen shown to unregistered users;
FIG. 8 is an example of user attribute information according to the present invention;
FIG. 9 is an example of user-owned product information;
FIG. 10 is an initial screen shown to registered users;
FIG. 11 is a sample optional equipment database;
FIG. 12 is a sample list of optional items;
FIG. 13 is an example of a screen used to set terms for a process of comparing products;
FIG. 14 is a sample product comparison list;
FIG. 15 is a sample after-sale service database;
FIG. 16 is a sample product database;
FIG. 17 is an example of data provided to the manufacturer;
FIG. 18 is an example of an advertisement request screen;
FIG. 19 is a sample list of after-sale service conditions;
FIG. 20 is an example of a screen for inputting detailed information on the malfunctioning of the product;
FIG. 21 is a sample quick estimate screen;
FIG. 22 is a sample quick estimate database;
FIG. 23 is a sample phenomenon database;
FIG. 24 is a sample frequency database; and

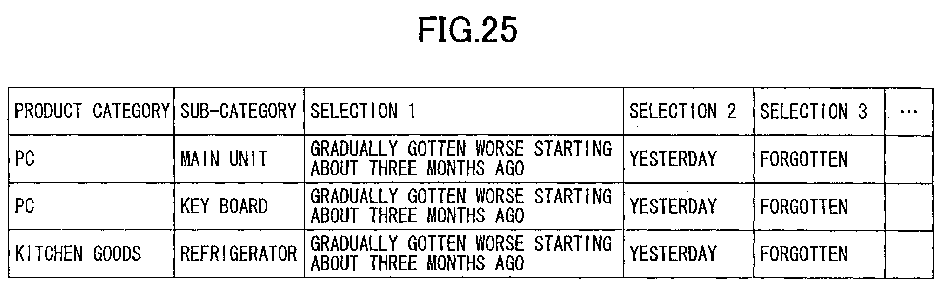

FIG. 25 is a sample period database.

### DETAILED DESCRIPTION OF THE INVENTION

A description will now be given of embodiments of the present invention, with reference to the accompanying drawings. It should be noted that identical or corresponding elements in the embodiments are given identical or corresponding reference numbers in all drawings, with detailed descriptions of such elements given once and thereafter omitted.

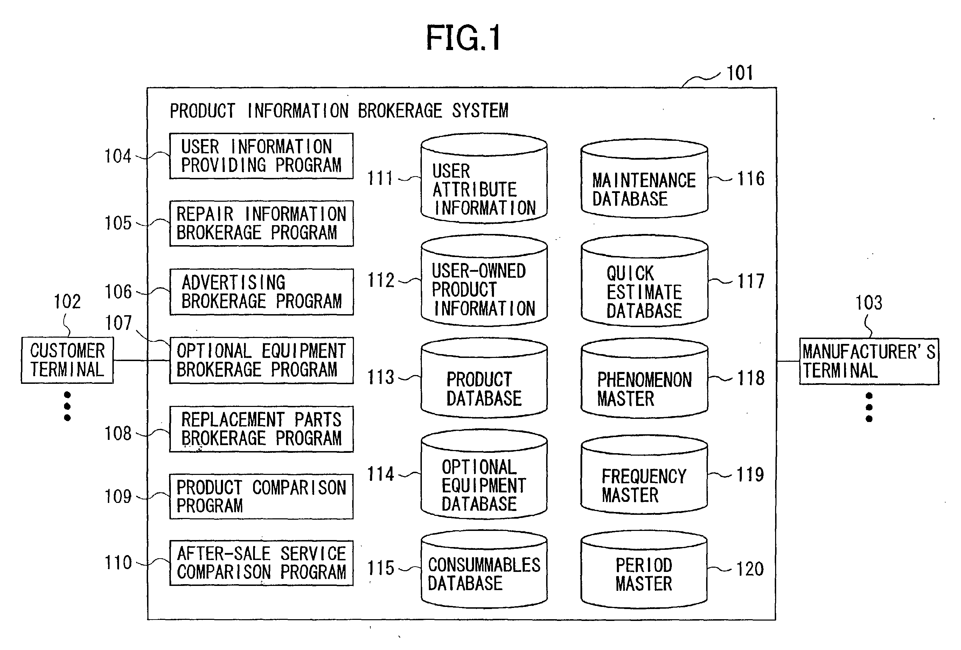

FIG. 1 is a block diagram of an improved product information brokerage system according to one embodiment of the present invention.

As shown in FIG. 1, the product information brokerage system 101 is connected to a plurality of user terminals 102 and a plurality of manufacturers' terminals 103 via an electronic network such as the internet.

Additionally, the product information brokerage system 101 is connected to a user information providing program 104 that provides manufacturers with user information, a repair information brokerage program 105 that brokers repair information, an advertisement brokerage unit 106 that brokers advertising information, an optional equipment brokerage program 107 that brokers optional equipment, a replacement parts brokerage program 108 that brokers replacement parts, a product comparison program 109 that compares products, an after-sale service comparison program 110 that compares conditions of after-sale service, user attribute information 111 that stores user attribute information, user-owned product information 112 that stores information on the products owned by users, a product database 113 that stores product information, an optional equipment database 114 that stores information on optional equipment, a replacement parts database 115 that stores information on consumable goods, an after-sale service database 116 that stores information on the level of after-sale service, a quick estimate database 117 for searching for quick estimates, a troubleshooting database 118 for storing selections of the type of problems occurring with the product as a result of breakdown, a frequency database 119 that stores selections of the frequency of the troubleshooting input screen, and a period database 120 that stores selections of the period of the troubleshooting screen.

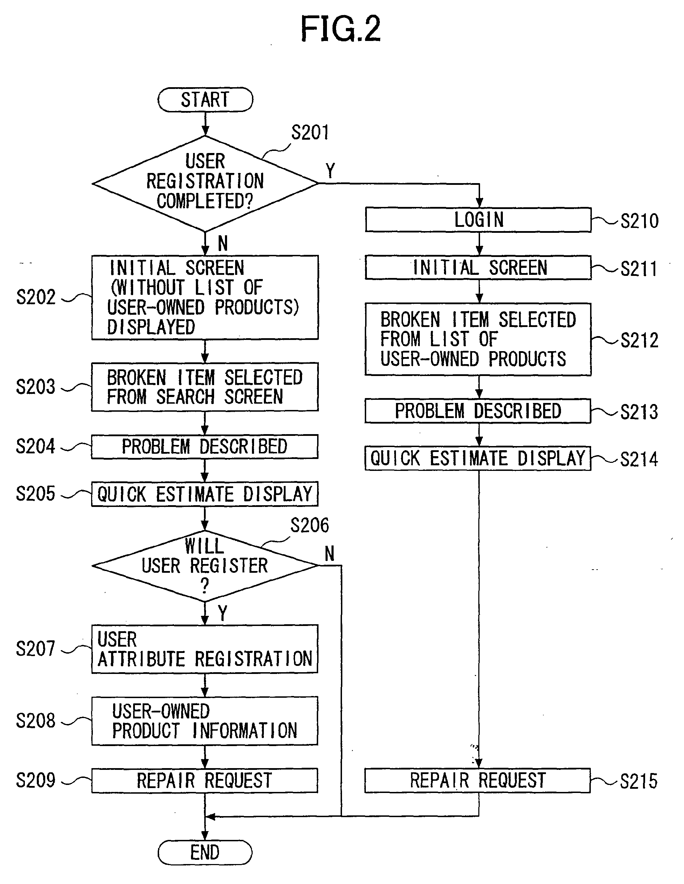

A description will now be given of the processing of a service repair request, with reference to FIG. 2.

FIG. 2 is a flow chart of steps in a processing of a service repair request.

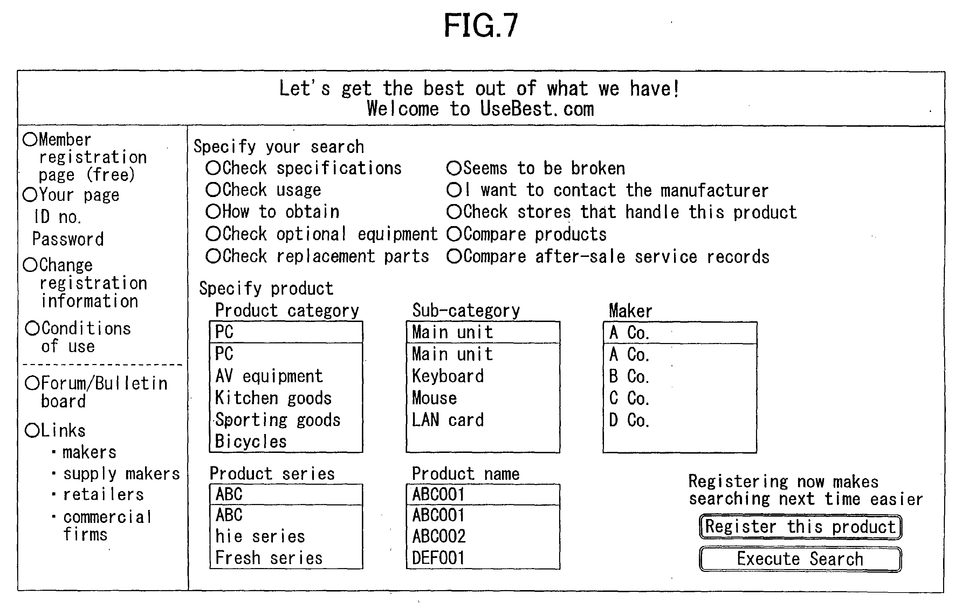

Initially, in a step S202, a user using the system for the first time is shown an initial screen like that shown in FIG. 7. FIG. 7 is an initial screen shown to unregistered users. Since no information about the product owned by the user has been registered the initial screen does not have a list of products owned.

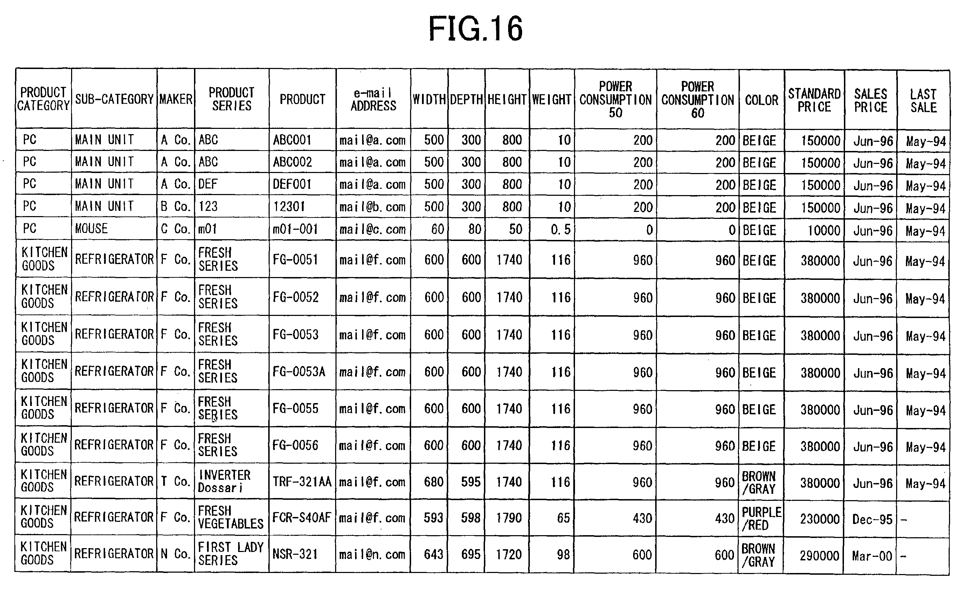

In a step S203, in a condition selection area based on the product database 113 of the screen of FIG. 7, the product owned by the customer is defined by a steady narrowing from the product database 113. In this case, for example, "personal computer" is entered for the product category, "main unit" is entered for the sub-category, "Co. A" is entered for the manufacturer, "ABC" for the product series and "ABC001" for the product name. FIG. 16 shows one example of the product database 113.

At this point, the user selects "Troubleshooting" from "What would you like to do?" and presses the execute button. Next, in a step S204 a description of what seems to be the problem is input.

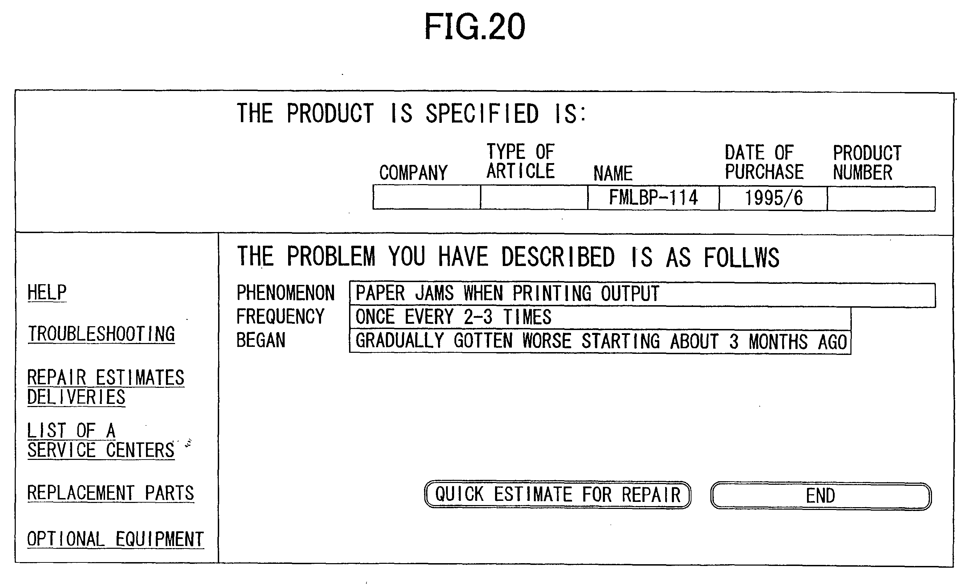

FIG. 20 is an example of a screen for inputting detailed information on the malfunctioning of the product.

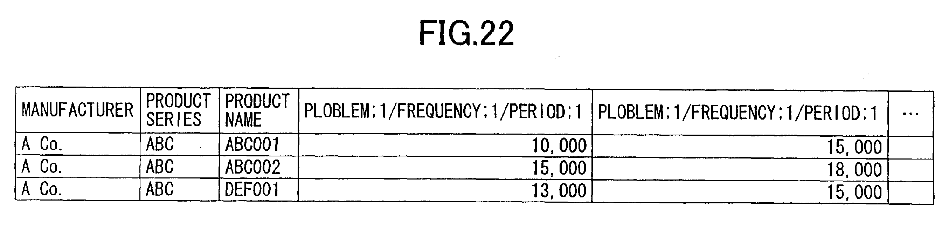

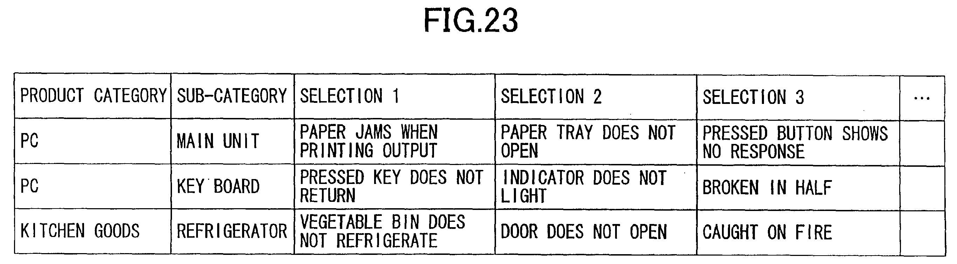

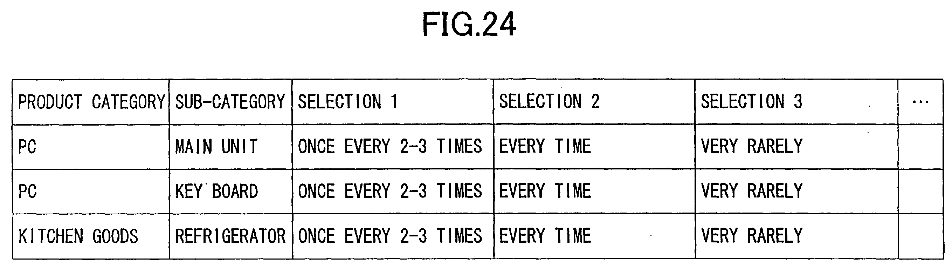

FIG. 22 shows an example of the phenomenon master. FIG. 23 shows an example of the frequency. master. FIG. 24 shows an example of the period master.

In FIG. 20, "Paper jams when printing output" is selected as the phenomenon, "Once every 2-3 times" is selected as the frequency and "Gradually gotten worse starting about 3 months ago" is selected as the period. Thus, selection number 1 has been selected for the phenomenon master, the frequency master and the period master.

The manufacturer of the product owned by the user, the name of the product series, and the name of the product are used to search the quick estimate database 117 and a record indicating that (in this case) the manufacturer is company A, the product series is ABC and the name of the product is ABC001, and further, with all selection items at 1, an estimate of ¥10,000 is determined.

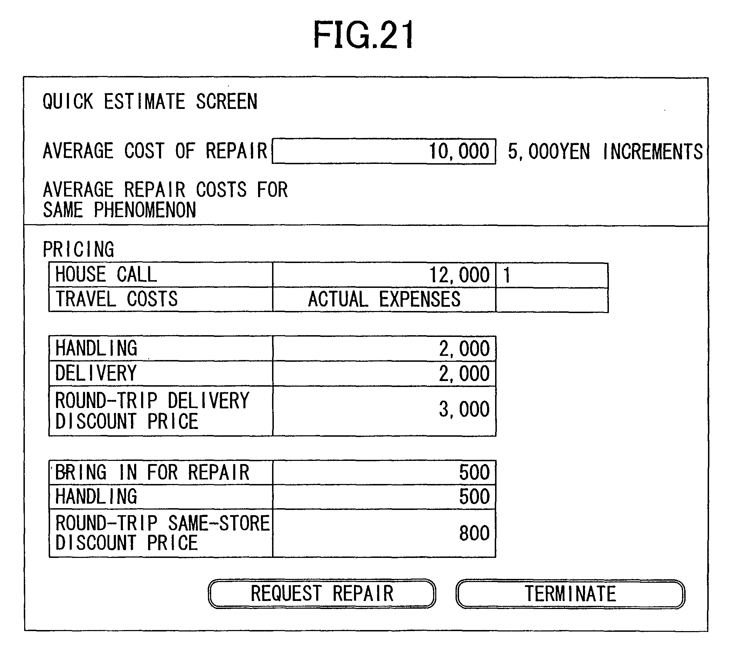

Next, in a step S205, the quick estimate is displayed. FIG. 21 shows a sample quick estimate screen as displayed.

It should be noted that it is also possible to display a list of option fees separate from the quick estimate on the quick estimate screen.

By pressing the button labeled "To request repair" shown in FIG. 21, in a step S206 users are required to decide whether or not they will conduct user registration and product registration. If the user does register, then the process proceeds to user attribute registration in a step S207. If there is no registration, then the process terminates and no repair request is made.

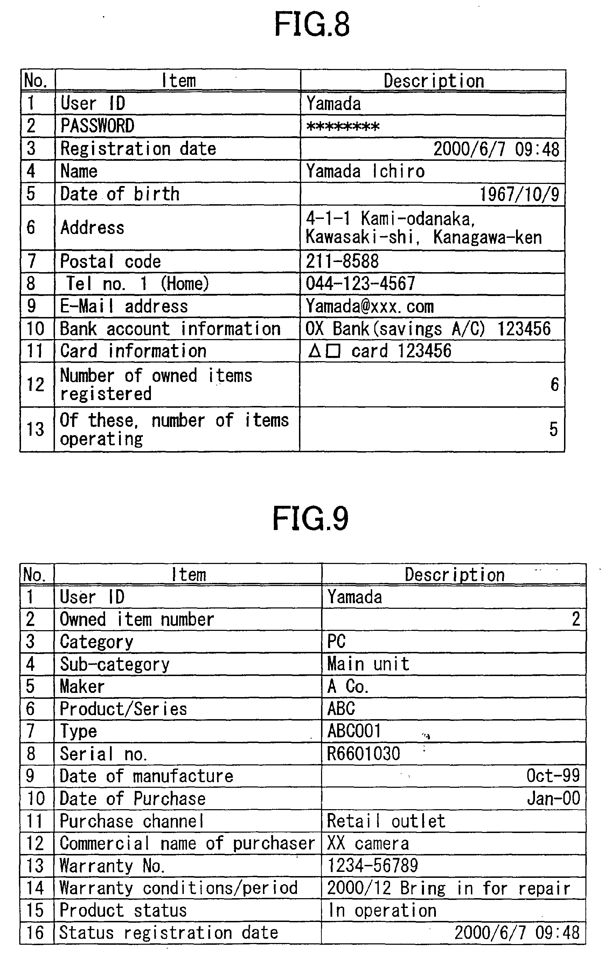

In a step S207, the user attributes are registered in the user attribute information 111. The actual content of what is to be registered is as shown in FIG. 8. FIG. 8 is an example of user attribute information according to the present invention.

Next, in a step S208, information about the product owned by the user is registered in the user-owned product information 112. The information to be registered is as shown in FIG. 9. FIG. 9 is an example of user-owned product information.

The user ID "yamada" in the product information 112 indicates the existence of a record of user ID "yamada" in the user attribute information 111. Additionally, the user-owned product code "2" in the user-owned information 112 indicates that this product information pertains to the second of the products owned by user ID "yamada".

When user registration and product registration have been completed, in a step S209 an e-mail is generated as a service repair request and transmitted to the manufacturer's e-mail address stored in the product database 113.

A description will now be given of processing in a case in which user registration and product registration have already been completed in a step S201.

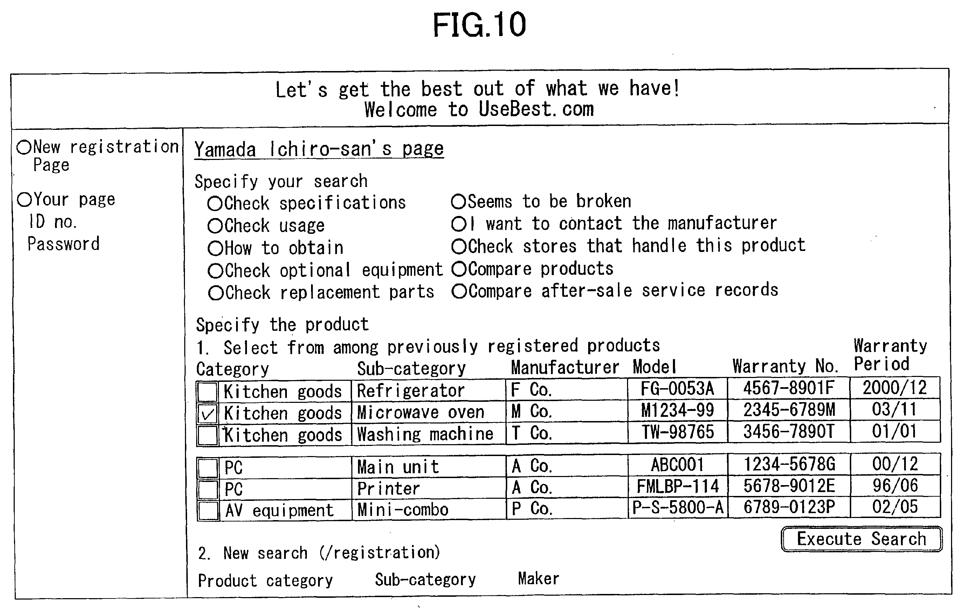

First, after logging in in a step S210 using the user ID and password of the user attribute information 111, the initialization screen shown in FIG. 10 is displayed in a step S211.

Here, information from the user-owned product information 112 linked to the user attribute information 111 is displayed as a list of products owned by a user having the user ID "yamada".

In a step S211, in the screen showing the list of product information as shown in FIG. 10, the selection "It seems to be broken" is selected from "What do you want to see?" The user then places a check next to the product requiring service repair. In a step S212, the "execute search" button is pressed. In a step S213, the nature of the problem is input.

FIG. 20 is an example of a screen for inputting detailed information on the malfunctioning of the product. The screen displays the resulting match of the phenomenon master 118 and the frequency master 119 and the period master 120 against the keys provided by the user-owned product, the product category, and the sub-category.

FIG. 22 is a sample quick estimate database. FIG. 23 is a sample phenomenon database. FIG. 24 is a sample frequency database.

In FIG. 20, "Paper jams when printing output" is selected as the phenomenon, "Once every 2-3 times" is selected as the frequency and "Gradually gotten worse starting about 3 months ago" is selected as the period. Thus, selection number 1 has been selected for the phenomenon master, the frequency master and the period master.

The manufacturer of the product owned by the user, the name of the product series, and the name of the product are used to search the quick estimate database 117 and a record indicating that (in this case) the manufacturer is company A, the product series is ABC and the name of the product is ABC001, and further, with all selection items at 1, an estimate of ¥10,000 is determined.

Next, in a step S214, the quick estimate is displayed. FIG. 21 is a sample quick estimate screen as displayed.

It should be noted that it is also possible to display a list of option fees separate from the quick estimate on the quick estimate screen.

By pressing the button labeled "To request repair" shown in FIG. 21, in a step S215 an e-mail is generated as a service repair request and transmitted to the manufacturer's e-mail address stored in the product database 113.

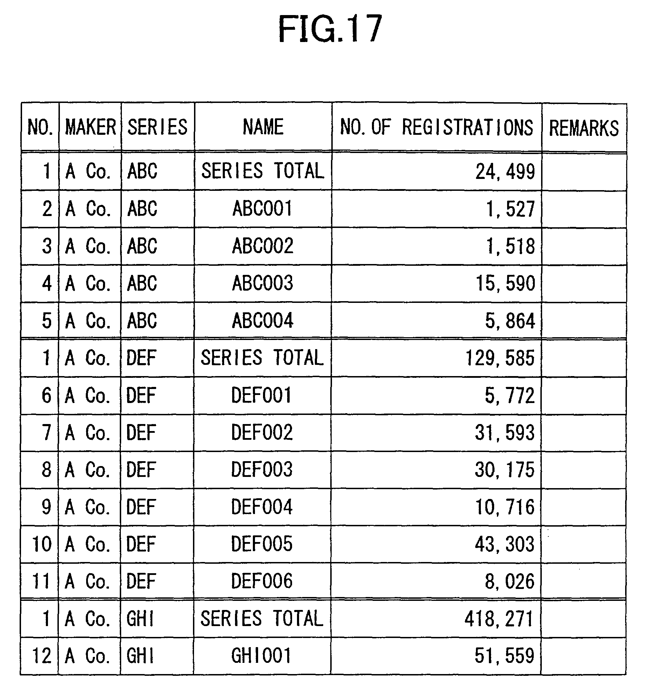

It should be noted that the registered user attribute information 111 and the user-owned product information 112 is provided to the manufacturer in the form of data collated on a per-product basis, so the manufacturers are able to obtain solid information on how well their products are performing, and, at the same time, can afford manufacturers a grasp of the amount of inventory they need to keep in stock for older models and allow them to provide product owners with effective information. FIG. 17 is an example of data provided to the manufacturer.

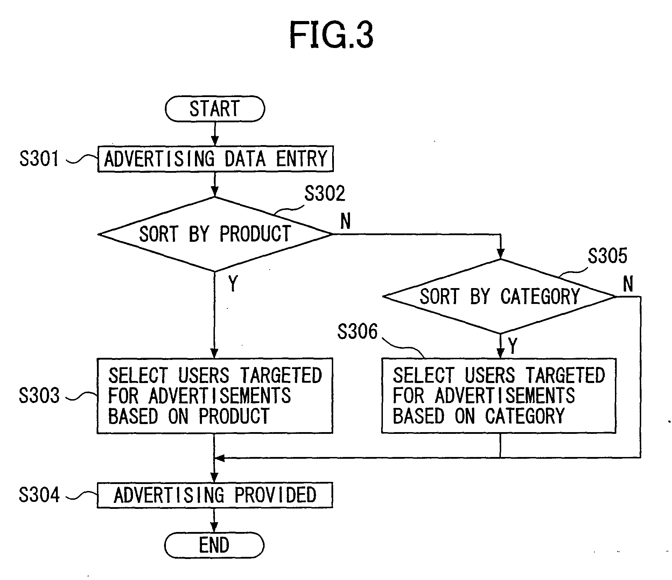

Next, a description will be given of the process of providing an advertisement, with reference to FIG. 3.

FIG. 3 is a flow chart of steps in a process of providing an advertisement.

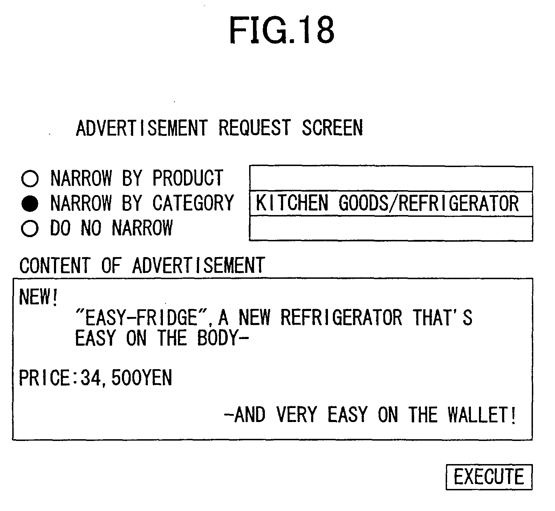

FIG. 18 is an example of an advertisement request screen. First, in a step S301 and a step S305, it is selected whether to narrow the targets of advertisement by product or by category or not to narrow the targets of advertisement at all. If narrowing by category is selected, then a category such as "kitchen goods/refrigerator" is selected. Thereafter, the contents of the advertising are entered in the advertising contents area and the "execute" button pressed, which then causes the advertising brokerage program 106 to select the advertising target user from the user-owned product information 112. The user attribute information is then searched using the selected user ID and an e-mail address is acquired, and advertising information is sent to that e-mail address.

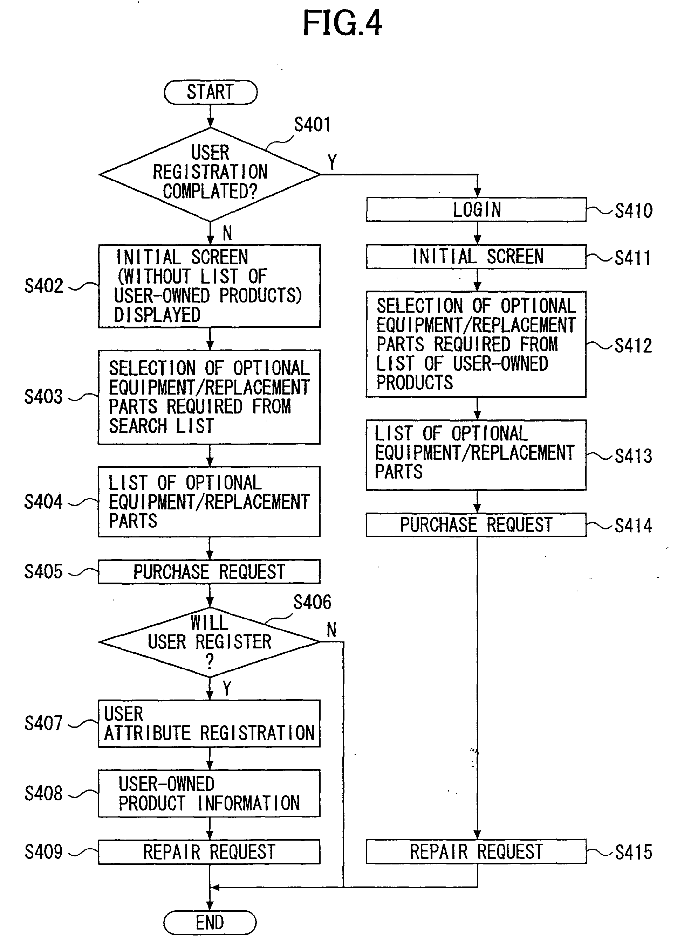

Next, a description will be given of optional equipment information and replacement parts information using FIG. 4.

FIG. 4 is a flow chart of steps in a process of searching for optional equipment and replacement parts.

It should be noted that the optional equipment database 114 and replacement parts database 115 are pre-recorded with information about optional equipment and replacement parts based on information provided by the manufacturer. Additionally, each of the records in the optional equipment database 114 and replacement parts database 115 has a corresponding manufacturer and product type number code, and so is linked to the product database 113.

Initially, in a step S402, the initial screen shown to unregistered users and depicted in FIG. 7 as described above is displayed. Since no information about the product owned by the user has been registered the initial screen does not have a list of products owned.

In a step S403, in a condition selection area based on the product database 113 of the screen of FIG. 7, the product owned by the customer is defined by a steady narrowing from the product database 113. In this case, for example, "personal computer" is entered for the product category, "main unit" is entered for the sub-category, "Co. A" is entered for the manufacturer, "ABC" for the product series and "ABC001" for the product name. FIG. 16 shows one example of the product database 113.

At this point, the user selects "Check optional equipment" or "Check replacement parts" from "What would you like to do?" and presses the execute button.

In the case of optional equipment brokerage, in a step S404 the optional equipment brokerage program 107 searches the optional equipment database 114 based on the name of the manufacturer and the name of the product and displays a list of the relevant optional equipment.

In the case of replacement parts, in a step S505 the replacement parts program 108 searches the replacement parts database 115 based on the name of the manufacturer and the name of the product and displays a list of the relevant replacement parts.

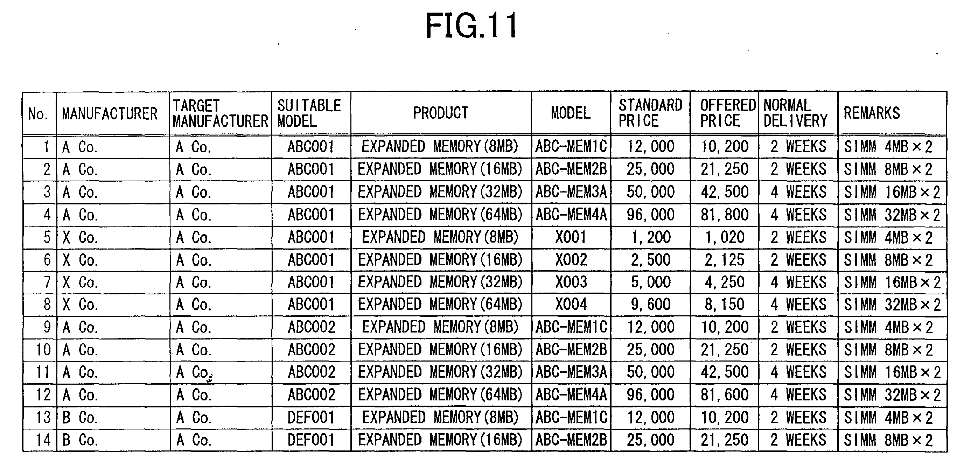

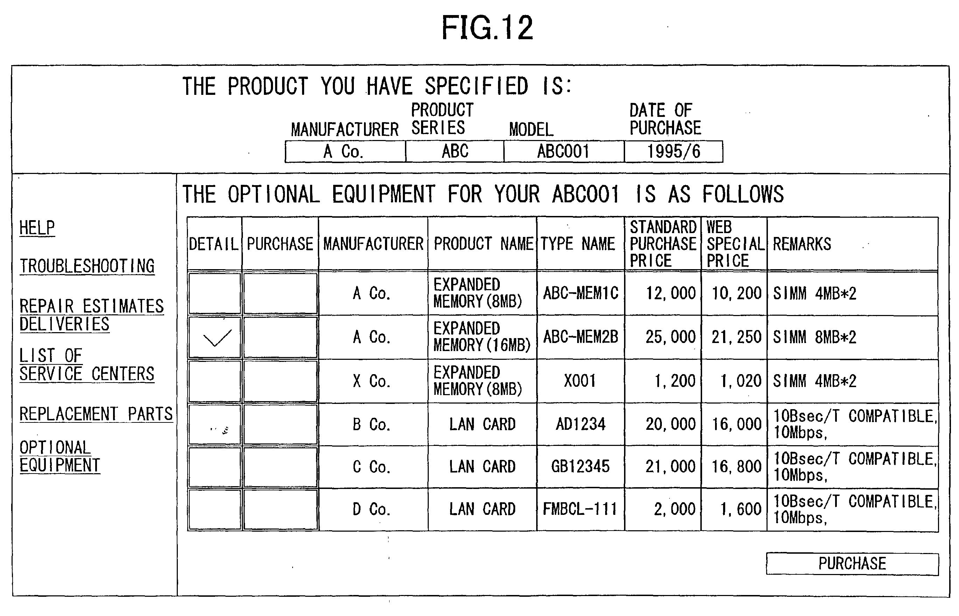

FIG. 11 shows a sample optional equipment database 114. FIG. 12 is a sample list of optional items.

Thereafter, by pressing the "purchase" button, in a step S406 the user is required to select whether or not to proceed with user registration and user-owned product registration. If the user decides to register, then in a step S407 the process proceeds to user attribute registration. If the user chooses not to register, then the process terminates and no purchase request is made.

When user registration and user-owned product information is completed, a purchase request is sent to the manufacturer's e-mail address stored in the product database 113.

A description will now be given of processing in a case in which user registration and user-owned product registration has already been completed in a step S401.

Initially, after logging in in a step S410, the initial screen shown in FIG. 10 is displayed in a step S411.

In a step S412, the user selects "Search optional equipment information" or "Search replacement parts" from "What would you like to do?" on the initial screen shown to registered users showing the list of user-owned product information as depicted in FIG. 10. The user then places a check next to the product requiring service repair, presses the "execute search" button. In case of the optional equipment brokerage, in a step S413 the optional equipment brokerage program 107 searches the optional equipment database 114 based on the name of the manufacturer and the name of the product, in this case "Co. A" and "ABC001", respectively, and then displays a list of the relevant products.

In the case of replacement parts brokerage, in a step S413 the replacement parts brokerage program 108 searches the replacement parts database 115 based on the name of the manufacturer and the name of the product, in this case "Co. A" and "ABC001", respectively, and a list of the relevant replacement parts is displayed.

If thereafter the "purchase" button is pressed, then a purchase request is sent to the manufacturer's e-mail address stored in the product database 113.

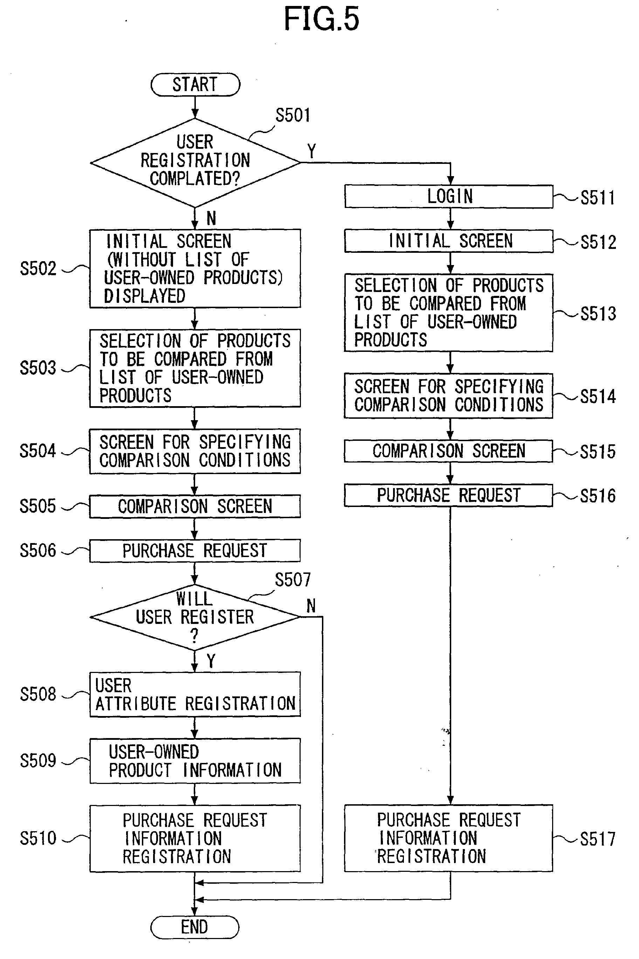

A description will now be given of a process of comparing products, with reference to FIG. 5.

FIG. 5 is a flow chart of steps in a process of comparing user-owned products.

For purposes of illustration, it should be noted that the description assumes that product specification information based on the manufacturer have already been registered in the product database 113.

Initially, in a step S502, a user using the system for the first time is shown the initial screen depicted in FIG. 7. Since no information about the product owned by the user has been registered the initial screen does not have a list of user-owned products.

In a step S503, in the condition selection area based on the product database 113 of the screen of FIG. 7, the product owned by the customer is defined by a steady narrowing from the product database 113. In this case, for example, "personal computer" is entered for the product category, "main unit" is entered for the sub-category, "Co. A" is entered for the manufacturer, "ABC" for the product series and "ABC001" for the product name. FIG. 16 shows one example of the product database 113.

At this point, the user selects "Troubleshooting" from "What would you like to do?" and presses the execute button.

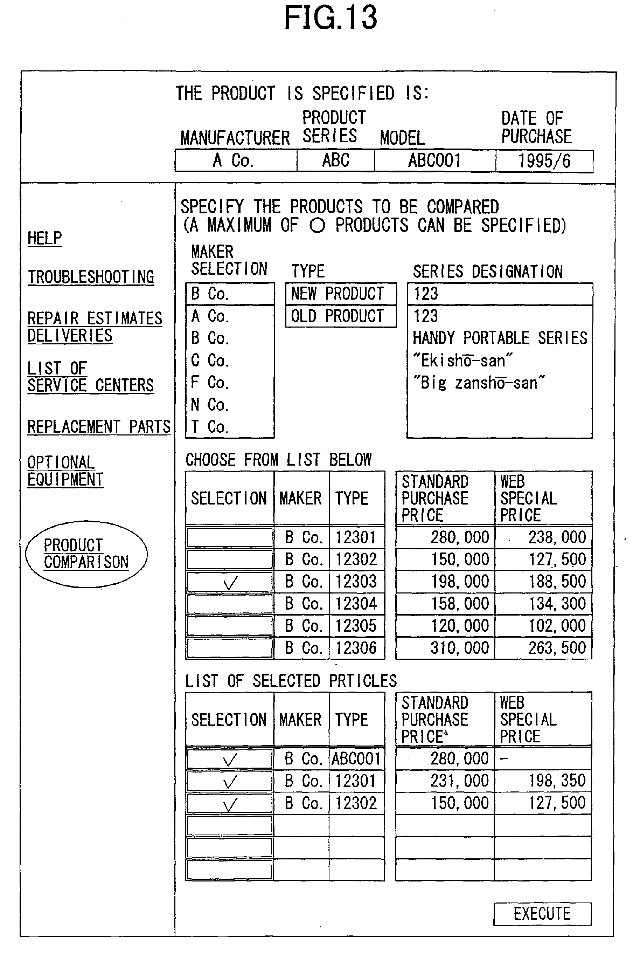

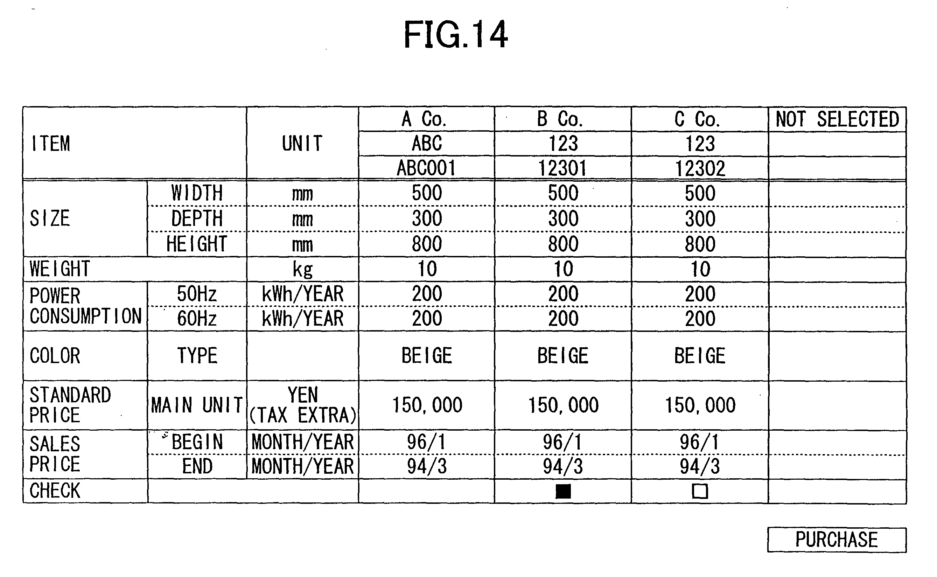

Based on the information in the product database 113, the product comparison program 109 displays a screen used to set terms for a process of comparing products like that depicted in FIG. 13 in a step S504. Records extracted from the product database 113 by user-owned product category and sub-category are further narrowed by manufacturer, type and series using the screen used to set terms for a process of comparing products as shown in FIG. 13, and a list of the remaining products is then displayed. The user then specifies the product or products for which comparison is sought and then presses the execute button, which then displays a sample product comparison list like that shown in FIG. 14.

If on the screen shown in FIG. 14 the 12301 product of company B is selected, then the check box for the 12301 product of company B is checked and the purchase button is pressed.

In a step S507, the user is required to select whether to carry out user registration and user-owned product registration. If the user does register, then the process proceeds to user attribute registration in step S508. If the user elects not to register, then the process terminates and no purchase order is generated.

Once user registration and user-owned product registration is completed, a purchase request is sent to the manufacturer's e-mail address stored in the product database 113.

A description will now be given of processing in a case in which user registration and user-owned product registration has already been completed in a step S501.

Initially, after logging in in a step S511, the initialization screen shown in FIG. 10 is displayed in a step S512.

Here, information from the user-owned product information 112 linked to the user attribute information 111 is displayed as a list of products owned by the user having the user ID "yamada".

In a step S513, the user selects "Product comparison" from "What would you like to do?" on the initial screen shown to registered users showing the list of user-owned product information as depicted in FIG. 10. The user then presses the "execute search" button.

In a step S514, the product comparison program 109 displays the screen used to set terms for a process of comparing products shown in FIG. 13 in a step S504 based on the information in the product database 113. Records extracted from the product database 113 by user-owned product category and sub-category are further narrowed by manufacturer, type and series using the screen used to set terms for a process of comparing products as shown in FIG. 13, and a list of the remaining products is then displayed. The user then specifies the product or products for which comparison is sought and then presses the execute button, which then displays a sample product comparison list like that shown in FIG. 14.

If on the screen shown in FIG. 14 the 12301 product of company B is selected for purchase, then the check box for the 12301 product of company B is checked and the purchase button is pressed. In a step S517 a purchase request order is then sent to the manufacturer's e-mail address stored in the product database 113.

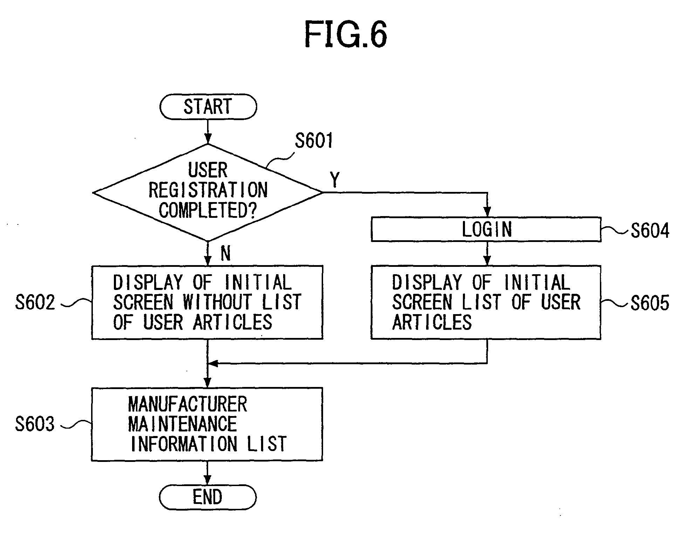

Next, a description will be given of the process of comparing after-sale service records, with reference to FIG. 6.

FIG. 6 is a flow chart of steps in a process of comparing after-sale service information.

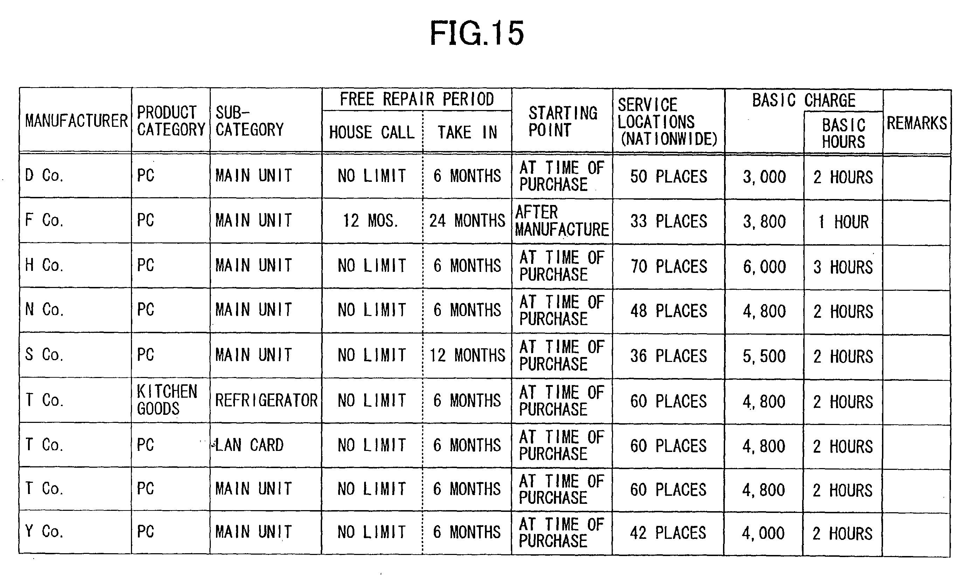

It should be noted that the following description assumes that after-sale service information on each manufacturer (based on information from each manufacturer) has already been registered in the after-sale service database 116. FIG. 15 is a sample after-sale service database.

Initially, in a step S602, a user using the system for the first time is shown the initial screen shown in FIG. 7. Since no information about the product owned by the user has been registered the initial screen does not have a list of user-owned products.

In the condition selection area based on the product database 113 of the screen of FIG. 7, "personal computer" is entered for the product category and "main unit" is entered for the sub-category. The user selects "Comparison of after-sale service conditions" from "What would you like to do?" and then presses the "Execute search" button.

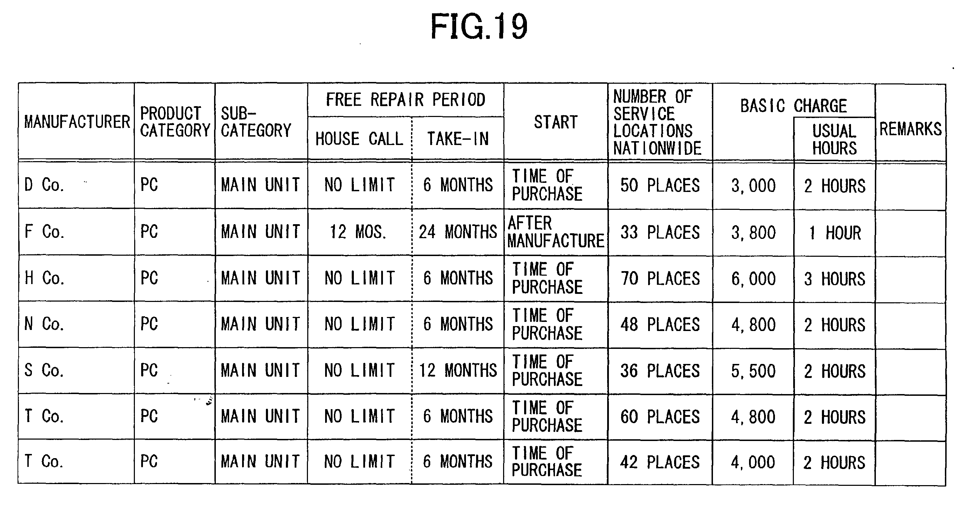

Records are extracted from the after-sale service database 116 using the above-described product category and sub-category and a list of after-sale service conditions is displayed as in FIG. 19.

A description will now be given of processing in the case that user registration and user-owned product registration have already been completed in a step S601.

Initially, after logging in in a step S604, the initial screen shown in FIG. 10 is displayed in a step S605.

Here, information from the user-owned product information 112 linked to the user attribute information 111 is displayed as a list of products owned by a user having the user ID "yamada".

As described above, FIG. 9 is an example of such user-owned product information. On this screen, the user selects "Comparison of after-sale service conditions" from "What would you like to do?" and then selects the products that belong to the product category and sub-category for which comparison is sought. Thereafter, the user presses the "Execute search" button.

Records are extracted from the after-sale service database 116 using the above-described product category and sub-category and a list of after-sale service conditions is displayed as in FIG. 19.

The above description is provided in order to enable any person skilled in the art to make and use the invention and sets forth the best mode contemplated by the inventor of carrying out the invention.

The present invention is not limited to the specifically disclosed embodiments, and variations and modifications may be made without departing from the scope and spirit of the present invention.

The present application is based on Japanese Priority Application No. 2000-219707, filed on July 19, 2000, the contents of which are hereby incorporated by reference.

## Claims

1. A product information brokerage system (101) for mediating between a plurality of users and a plurality of manufacturers via an electronic network, the system **characterized by** having:
a user information storage unit (111, 112) for storing user attribute information and user-owned product information;
a product information storage unit (113, 114, 115) for storing product information;
a product information providing unit (105, 107, 108) for providing users with information related to the products owned by users based on the product information; and
a user information providing unit (104) for providing user information to manufacturers of the products owned by users based on the user attribute information and user-owned product information.

2. The product information brokerage system (101) as claimed in claim 1, further comprising a user information registration unit that requests user attribute information only when necessary.

3. The product information brokerage system (101) as claimed in claim 1 or 2, further comprising a repair information brokerage unit (105) that provides a manufacturer with a user request for repair of a user-owned product based on the information stored in the product information storage unit.

4. The product information brokerage system (101) as claimed in claim 1, 2, or 3, further comprising an advertisement brokerage unit (106) that provides advertisements to users based on the information stored in the user information storage unit (111) in response to requests from manufacturers to supply such advertisements.

5. The product information brokerage system (101) as claimed in claim 1, 2, 3, or 4, further comprising:
a parts information storage unit (114, 115) for storing parts information linked to the product information; and
a parts information selection unit (106, 107) for selecting parts information related to the user-owned products from the parts information stored in the parts information storage unit (114, 115).

6. The product information brokerage system (101) as claimed in any preceding claim, further comprising a product information selection unit for selecting information about products of a same category as the products owned by the users from the product information stored in the product information storage unit (112, 113).

7. The product information brokerage system (101) as claimed in any preceding claim, further comprising:
an after-sale service information storage unit for storing after-sale service information (116); and
an after-sale service information selection unit (110) for selecting after-sale service information of a plurality of manufacturers related to products of a same category from the after-sale service information storage unit (116).

8. A product information brokerage method for mediating between a plurality of users and a plurality of manufacturers via an electronic network, the method **characterized by** having the steps of:
processing information related to user-owned products; and
providing user requests for repair of user-owned products to manufacturers based on pre-stored product information provided by the plurality of manufacturers.

9. A product information brokerage method for mediating between a plurality of users and a plurality of manufacturers via an electronic network, the method **characterized by** having the step of outputting information about parts related to products owned by users based on pre-stored product information of a plurality of manufacturers and on parts information of a plurality of manufacturers linked to the product information.

10. A product information brokerage method for mediating between a plurality of users and a plurality of manufacturers via an electronic network, the method **characterized by** having the steps of:
processing information related to user-owned products; and
outputting information about products of a same category as the products owned by users based on pre-stored product information provided by the plurality of manufacturers.

11. A product information brokerage method for mediating between a plurality of users and a plurality of manufacturers via an electronic network, the method **characterized by** having the steps of:
causing a computer to store user attribute information and user-owned product information;
storing product information;
providing users with product information related to products owned by the users; and
providing information about users of the manufacturers' products to the manufacturers.

12. A method as claimed in any one of claims 8 to 11 when implemented on a computer.

13. A product information brokerage program for mediating between a plurality of users and a plurality of manufacturers via an electronic network, the program **characterized by** having:
a first program code means for causing a computer to store user attribute information and user-owned product information;
a second program code means for storing product information; and
a third program code means for providing information about users of the manufacturers' products to the manufacturers.

14. A program which when implemented on a computer carries out the method of any one of claims 8 to 11.

15. A program as claimed in claim 13 or 14 when stored on a computer-readable medium.

16. A computer specially configured by executing program code for mediating between a plurality of users and a plurality of manufacturers via an electronic network, the program code including:
computer-readable program means for processing information related to user-owned products; and
computer-readable program means for providing user requests for repair of user-owned products to manufacturers based on pre-stored product information of a plurality of manufacturers.

17. A computer specially configured by executing program code for mediating between a plurality of users and a plurality of manufacturers via an electronic network, the program code including a computer-readable program for outputting information about parts related to products owned by users based on pre-stored product information of a plurality of manufacturers and on parts information of a plurality of manufacturers linked to the product information.

18. A computer specially configured by executing program code for mediating between a plurality of users and a plurality of manufacturers via an electronic network, the program code including:
computer-readable program code means for processing information related to user-owned products; and
computer-readable program code means for outputting information about products of a same category as the products owned by users based on pre-stored product information provided by the plurality of manufacturers.

19. A computer specially configured by executing program code for mediating between a plurality of users and a plurality of manufacturers via an electronic network, the program code including:
computer-readable program code means for causing a computer to store user attribute information and user-owned product information;
computer-readable program code means for storing product information;
computer-readable program code means for providing users with product information related to products owned by the users; and
computer-readable program code means for providing information about users of the manufacturers' products to the manufacturers.

20. A computer as claimed in any one of claims 16 to 19, wherein said program code is stored on a medium readable by said computer.
